# DEMANDE DE BREVET EUROPEEN

(11) **EP 4 656 038 A1**
(43) Date de publication de la demande: **03.12.2025**
(21) Numéro de dépôt: 25179619.9
(22) Date de dépôt: 28.05.2025
(51) Int. Cl.: A01K 1/00, E05B 65/00, E05C 1/06, E05C 1/08, E05C 1/16, E05C 9/08, E06B 11/02

(54) **DISPOSITIF DE VERROUILLAGE AMELIORÉ POUR BARRIÈRE AGRICOLE**

(30) Priorité: 30.05.2024 FR 2405615
(71) Demandeur: Tubex, 45300 Escrennes (FR)
(72) Inventeur: JOURDAIN, Dominique, 45300 ESCRENNES (FR)
(74) Mandataire: Cabinet Beau de Loménie

(57) **Abrégé**

Dispositif (10) de verrouillage pour barrière (1) agricole comprenant une partie ouvrante (A) et une partie dormante (B), le dispositif (10) comprenant au moins deux verrous (12) mobiles en translation entre une position déployée permettant un verrouillage de la partie ouvrante (A) par rapport à la partie dormante (B), et une position rétractée permettant une libération de la partie ouvrante (A), un levier d'actionnement (20) apte à pivoter par rapport à la barrière (1) autour d'un premier axe de rotation (R1), les au moins deux verrous (12) étant reliés au levier d'actionnement (20) de telle sorte qu'une rotation du levier d'actionnement (20) autour du premier axe de rotation (R1) entraîne un mouvement conjoint desdits verrous (12) entre leur position déployée et leur position rétractée.

## Description

### Domaine Technique

La présente invention concerne un dispositif de verrouillage notamment pour barrière agricole apte à délimiter un enclos occupé par des animaux de type bétail, et une barrière agricole comprenant un tel dispositif.

### Technique antérieure

Des barrières agricoles permettent de délimiter un enclos dans lequel des animaux tels que des bovins ou des ovins sont présents. Des telles barrières comprennent typiquement une partie dormante immobile, et une partie ouvrante (autrement dit une porte), mobile par rapport à la partie dormante en pivotant entre une position fermée et une position ouverte.

Pour maintenir la partie ouvrante en position fermée par rapport à la partie dormante, les barrières agricoles comprennent un dispositif de verrouillage. Des dispositifs de verrouillage connus peuvent comprendre un verrou mobile en translation entre une position déployée de verrouillage, et une position rétractée de libération.

Les dispositifs de verrouillage sont typiquement portés par la partie dormante. Ainsi, dans la position déployée de verrouillage, le verrou fait saillie au-delà d'un montant de la partie ouvrante, de manière à pouvoir coopérer avec une gâche portée par la partie dormante, bloquant ainsi la partie ouvrante par rapport à la partie dormante. En outre, de manière connue, les dispositifs de verrouillage peuvent comprendre un moyen de rappel tel qu'un ressort permettant de rappeler le verrou vers sa position déployée de verrouillage.

Néanmoins, les dispositifs de verrouillage connus ne permettent pas d'assurer à la fois la solidité et la fiabilité du verrouillage, et donc la sécurité pour les animaux et les utilisateurs, et la simplicité d'utilisation. En particulier, l'amélioration des dispositifs de verrouillage, pour en assurer la fiabilité et la sécurité, est limitée par la nécessité de fournir des dispositifs simples d'utilisation, efficaces et faciles à actionner.

Il existe donc un réel besoin pour un dispositif de verrouillage qui soit dépourvu, au moins en partie, des inconvénients inhérents aux configurations connues précitées.

### Exposé de l'invention

Le présent exposé concerne un dispositif de verrouillage pour barrière agricole comprenant une partie ouvrante et une partie dormante, le dispositif comprenant :
- au moins deux verrous mobiles en translation entre une position déployée permettant un verrouillage de la partie ouvrante par rapport à la partie dormante, et une position rétractée permettant une libération de la partie ouvrante,
- un levier d'actionnement apte à pivoter par rapport à la barrière autour d'un premier axe de rotation, les au moins deux verrous étant reliés au levier d'actionnement de telle sorte qu'une rotation du levier d'actionnement autour du premier axe de rotation entraîne un mouvement conjoint desdits verrous entre leur position déployée et leur position rétractée, dans lequel une extrémité supérieure du levier d'actionnement comprend une poignée de préhension, le premier axe de rotation étant disposé à une extrémité inférieure dudit levier d'actionnement, l'extrémité inférieure étant apte à être disposée à proximité d'une extrémité inférieure de la partie ouvrante, et l'extrémité supérieure étant apte à être disposée à proximité de l'extrémité supérieure de la partie ouvrante.

Dans le présent exposé, les termes « haut », « bas », « vertical » et « horizontal » et leurs dérivés sont définis par rapport à la disposition normale d'une barrière dans un enclos agricole. Typiquement, la partie ouvrante de la barrière tourne par rapport à la partie dormante en pivotant autour d'un axe de rotation vertical. Par ailleurs, les termes « haut » et « bas » sont définis par rapport à une direction verticale, et le terme « latéral » est défini par rapport à une direction horizontale, perpendiculaire à la direction verticale.

La position déployée peut autrement être nommée « position sortie » ou « position de verrouillage », et correspond à une configuration dans laquelle les verrous font saillie au-delà de la partie ouvrante pour être apte à coopérer chacun avec une gâche portée par la partie dormante (lorsque le dispositif de verrouillage est fixé sur la partie dormante). La position rétractée peut autrement être nommée « position rentrée » ou « position de déverrouillage », et correspond à une configuration dans laquelle les verrous sont déplacés latéralement vers la partie ouvrante pour sortir des gâches et libérer la partie ouvrante par rapport à la partie dormante.

Le dispositif de verrouillage selon le présent exposé comprend au moins deux verrous, ce qui permet d'améliorer la solidité, l'efficacité et donc la sécurité du verrouillage de la barrière agricole. Par ailleurs, les au moins deux verrous sont chacun relié à un seul et même levier d'actionnement, de telle sorte qu'il est possible, par un unique mouvement de rotation du levier d'actionnement, de déplacer conjointement et d'un bloc les deux verrous par translation, pour passer ces derniers de la position déployée à la position rétractée.

En effet, sur une barrière selon l'art antérieur comprenant deux verrous, il est nécessaire, pour pouvoir ouvrir la barrière, d'actionner d'abord un premier verrou, puis d'actionner le deuxième verrou tout en maintenant le premier verrou en position rétractée, rendant le processus complexe et peu commode. Le dispositif de verrouillage selon le présent exposé permet de simplifier ce processus en actionnant conjointement les deux verrous.

Par conséquent, le dispositif selon le présent exposé permet d'améliorer la robustesse du verrouillage de la barrière, et donc la sécurité pour les utilisateurs et les animaux, tout en conservant une utilisation simple du dispositif, efficace et peu couteuse en temps. Un simple et unique mouvement d'actionnement du levier permet en effet le déverrouillage simultané des au moins deux verrous.

Dans certains modes de réalisation, le dispositif est configuré pour exercer une force de rappel sur les verrous tendant à les maintenir dans leur position déployée, le levier d'actionnement étant apte à être actionné pour pivoter dans un premier sens de rotation entraînant le mouvement conjoint desdits verrous de leur position déployée vers leur position rétractée à l'encontre de la force de rappel, et à pivoter dans un deuxième sens de rotation opposé au premier sens de rotation lorsque les verrous sont ramenés dans leur position déployée par la force de rappel.

Dans certains modes de réalisation, le dispositif comprend une pièce de liaison à laquelle sont fixées les au moins deux verrous, la pièce de liaison étant fixée de manière mobile en rotation par rapport au levier d'actionnement, de telle sorte qu'une rotation du levier d'actionnement autour du premier axe de rotation entraîne une translation de la pièce de liaison et une rotation relative entre la pièce de liaison et le levier d'actionnement autour d'un deuxième axe de rotation.

Dans certains modes de réalisation, le dispositif comprend une portion de support apte à être fixée à la barrière et supportant le levier d'actionnement, la portion de support comprenant un élément bas disposé plus bas que les deux verrous, et un élément haut disposé plus haut que les deux verrous.

Dans certains modes de réalisation, le levier d'actionnement est fixé à l'élément bas de manière mobile en rotation et est apte à pivoter par rapport audit élément bas autour du premier axe de rotation.

Dans certains modes de réalisation, l'élément haut comprend une portion de guidage apte à recevoir et à guider le levier d'actionnement lors de son actionnement.

Dans certains modes de réalisation, la portion de guidage comprend une rampe ayant une paroi inclinée apte à guider le levier d'actionnement lors du passage des verrous de leur position rétractée à leur position déployée, et une paroi de blocage apte à limiter un déplacement du levier d'actionnement dans un sens de rotation permettant le passage des verrous de leur position déployée à leur position rétractée.

Dans certains modes de réalisation, l'élément bas comprend une fente oblongue permettant une translation du premier axe de rotation.

Dans certains modes de réalisation, le levier d'actionnement est au moins en partie arqué.

Dans certains modes de réalisation, les verrous sont chacun montés mobiles en translation dans un guide tubulaire renfermant un ressort apte à maintenir les verrous dans la position déployée.

Le présent exposé concerne également une barrière agricole comprenant une partie ouvrante et une partie dormante, et un dispositif de verrouillage selon l'un quelconque des modes de réalisation précédents.

Dans certains modes de réalisation, le dispositif de verrouillage est fixé sur la partie ouvrante.

Les caractéristiques et avantages précités, ainsi que d'autres, apparaîtront à la lecture de la description détaillée qui suit, d'un exemple de réalisation du dispositif de verrouillage. Cette description détaillée fait référence aux dessins annexés.

### Brève description des dessins

Les dessins annexés sont schématiques et visent avant tout à illustrer les principes de l'exposé. Sur ces dessins, d'une figure à l'autre, des éléments (ou parties d'élément) identiques sont repérés par les mêmes signes de référence.
[Fig. 1] La figure 1 représente une vue en perspective d'une barrière agricole comprenant un dispositif de verrouillage selon un mode de réalisation de l'invention,
[Fig. 2A] La figure 2A représente, en perspective, le dispositif de verrouillage seul, dans une position déployée des verrous,
[Fig. 2B] La figure 2B représente, en perspective, le dispositif de verrouillage seul, dans une première position rétractée des verrous, par déplacement d'une extrémité supérieure du levier d'actionnement,
[Fig. 2C] La figure 2C représente, en perspective, le dispositif de verrouillage seul, dans une deuxième position rétractée des verrous, par déplacement d'une extrémité inférieure du levier d'actionnement,
[Fig. 3] La figure 3 représente une vue détaillée de l'extrémité supérieure du dispositif de verrouillage,
[Fig. 4] La figure 4 représente une vue de face du dispositif de verrouillage dans une position de fermeture de la partie ouvrante de la barrière,
[Fig. 5] La figure 5 représente une vue détaillée en perspective d'une pièce de liaison du dispositif de verrouillage.

### Description des modes de réalisation

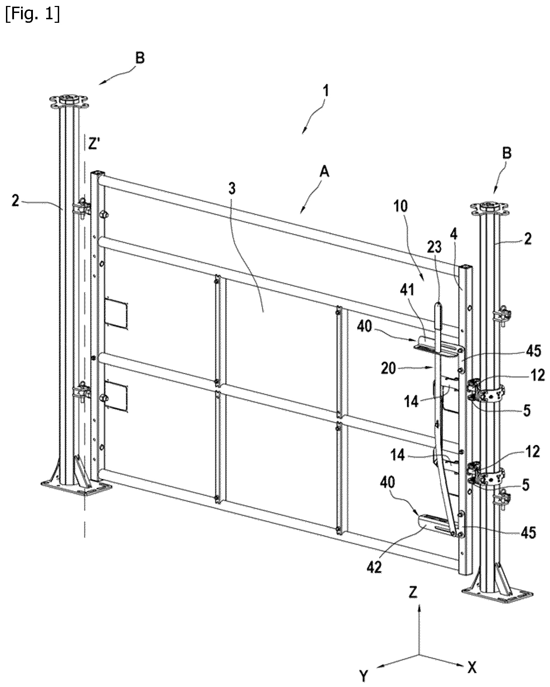

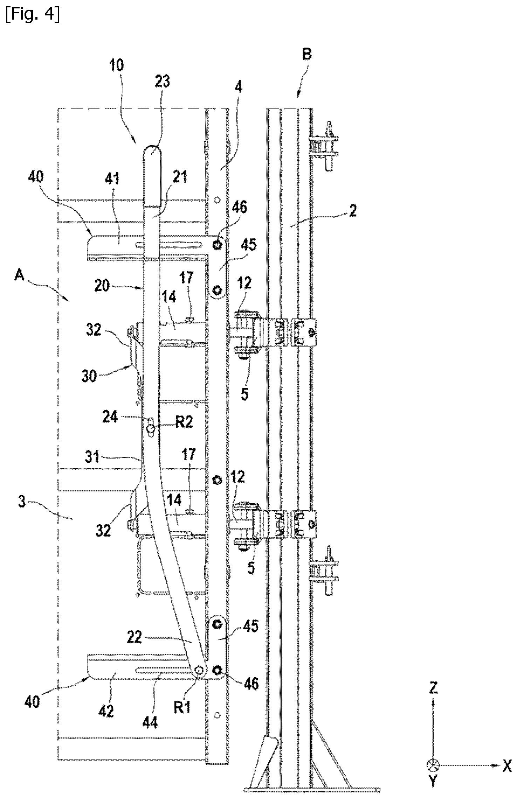

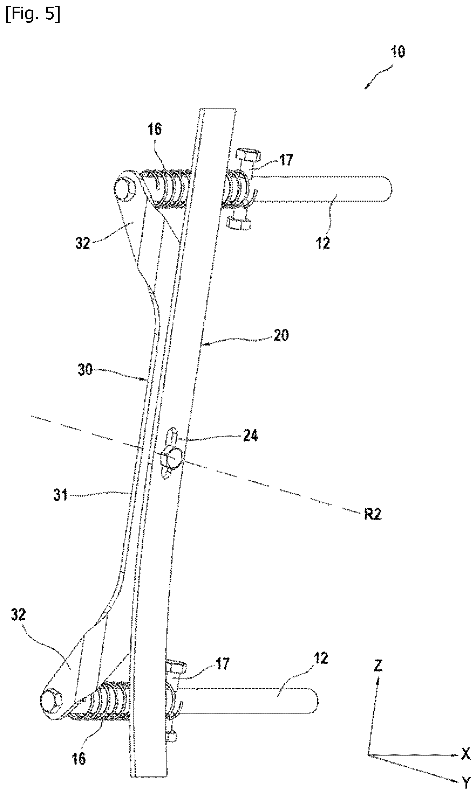

Afin de rendre plus concret l'exposé, un exemple de dispositif de verrouillage est décrit en détail ci-après, en référence aux figures 1 à 5 annexées. Il est rappelé que l'invention ne se limite pas à cet exemple.

La figure 1 est une vue partielle en perspective d'une barrière agricole 1 comprenant un dispositif de verrouillage 10 selon l'invention.

On définit un repère spatial XYZ dans lequel est placée la barrière 1, avec un axe horizontal X, définissant une direction latérale, un axe horizontal Y, définissant une direction transversale, et un axe vertical Z, définissant une direction verticale.

Ainsi, dans la suite de la description, les termes « haut », « bas », « supérieur », « inférieur » et leurs dérivés sont définis par rapport à la direction verticale Z. Par ailleurs, par convention, les termes « gauche » et « droite » sont définis par rapport à la direction latérale X, et les termes « avant » et « arrière » sont définis par rapport à la direction transversale Y.

La barrière agricole 1 est une barrière pour enclos comprenant une partie ouvrante A de barrière et une partie dormante B de barrière.

Sur la figure 1, seuls deux montants 2 de la partie dormante B, fixés au sol et disposés de part et d'autre de la partie dormante A, sont représentés. On comprend bien entendu que la partie dormante B se poursuit au-delà de ce qui est représenté, de manière à former un enclos apte à renfermer des animaux.

La partie ouvrante A comprend une porte 3 qui est apte à adopter une position de fermeture (représentée sur la figure 1) par rapport à la partie dormante B et à pivoter par rapport à un premier montant 2 autour d'un axe de rotation Z' vertical de manière à adopter une position d'ouverture.

Un deuxième montant 2 de la partie dormante B porte au moins deux, dans cet exemple exactement deux dispositifs de fermeture 5 comprenant chacun une gâche apte à coopérer avec un verrou 12 du dispositif de verrouillage 10 décrit ci-après.

De préférence, les dispositifs de fermeture 5 comprennent chacun un système permettant le claquage automatique de la porte 3, par exemple une butée inclinée permettant aux verrous 12 de glisser le long de cette butée en se rétractant, et un moyen de blocage des verrous 12 dans la direction transversale Y. Un exemple d'un tel dispositif de fermeture 5 est décrit dans le document FR3068722. Toutefois, les dispositifs de fermeture 5 ne sont pas l'objet de l'invention, et ne seront pas décrits plus en détails dans la suite de la description.

La barrière agricole 1 comprend en outre un dispositif de verrouillage 10, fixé de préférence à la partie ouvrante A. De manière alternative, le dispositif de verrouillage 10 pourrait être fixé sur la partie dormante B, l'agencement décrit plus bas étant alors inversé, et les dispositifs de fermeture 5 disposés sur la partie ouvrante A.

Dans cet exemple, le dispositif de verrouillage 10 est fixé à un montant vertical 4 de la partie ouvrante A, par l'intermédiaire d'une portion de support 40. La portion de support 40 comprend typiquement un élément haut 41 disposé plus haut que les deux verrous 12 décrits ci-après, et un élément bas 42 disposé plus bas que les deux verrous 12.

En d'autres termes, l'élément haut 41 est fixé au montant vertical 4 à proximité d'une extrémité supérieure de la porte 3, au-dessus des deux verrous 12, et l'élément bas 42 est fixé au montant vertical 4 à proximité d'une extrémité inférieure de la porte 3, au-dessous des deux verrous 12. Cela permet d'améliorer la tenue de la fixation du dispositif de verrouillage 10 à la partie ouvrante A.

Typiquement, les éléments haut et bas 41, 42 présentent chacun une forme d'équerre, dont une branche forme une portion de fixation 45 apte à être fixée au montant vertical 4. Dans cet exemple, les portions de fixation 45 sont fixées au montant vertical 4 par des moyens de fixation 46 de type liaison boulonnée passant par des orifices formés dans le montant vertical 4.

Cependant, cet exemple n'est pas limitatif, les moyens de fixation 46 pouvant également comporter une bride, ou un cavalier, pouvant se serrer autour du montant vertical 4, sans que ce dernier ne nécessite de perçage. Cette dernière solution permet au dispositif de verrouillage 10 d'être adaptif et modulable, et d'être fixé sur différents types de barrières sans qu'aucune modification ne soit apportée à celles-ci. De manière alternative, les portions de fixation 45 pourraient également être soudées au montant vertical 4.

Par ailleurs, le dispositif de verrouillage 10 comprend au moins deux verrous 12, dans cet exemple exactement deux verrous 12, chacun apte à coopérer avec une gâche d'un système de fermeture 5 lorsqu'elle est en position déployée.

En effet, les verrous 12 sont chacun mobile en translation, dans la direction latérale X, entre une position déployée, ou position de verrouillage, et une position rétractée, ou position de déverrouillage.

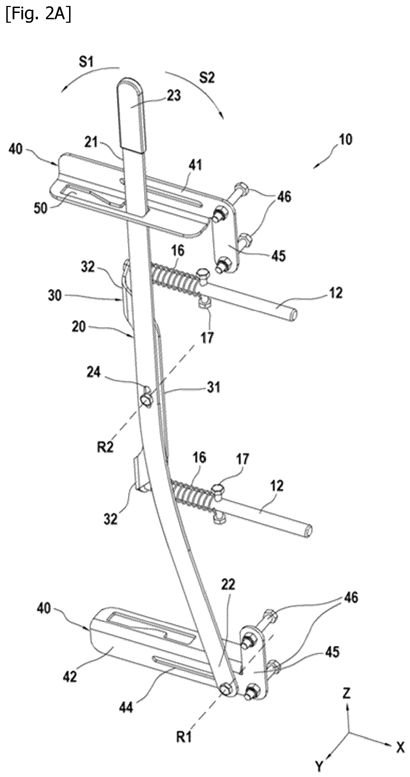

Dans la position déployée, les verrous 12 font saillie au-delà de la partie ouvrante A, notamment à travers des orifices du montant vertical 4, de manière à pouvoir coopérer avec les gâches des systèmes de fermeture 5 lorsque la partie ouvrante A est dans sa position de fermeture. La partie ouvrante A est alors immobilisée dans la position de fermeture par rapport à la partie dormante B (configuration représentée sur la figure 1 et la figure 2A).

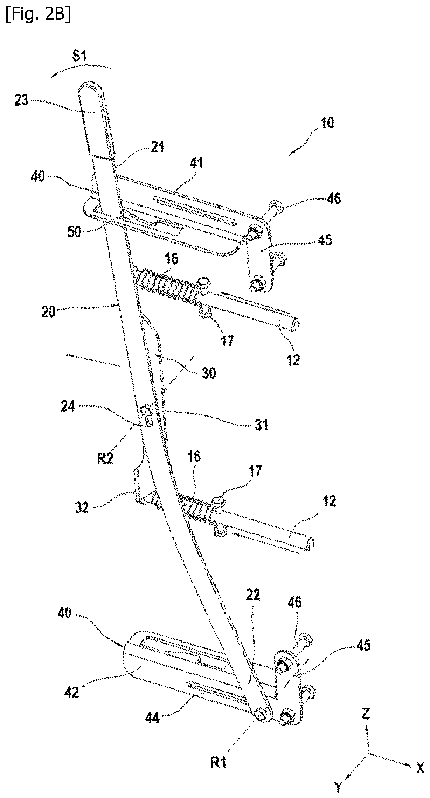

A l'inverse, lorsque les verrous 12 sont dans la position rétractée, en translatant latéralement vers la gauche (figure 2B), ces derniers ne coopèrent plus avec les gâches, ce qui libère la partie ouvrante A de la partie dormante B, la partie ouvrante A pouvant alors passer en position d'ouverture en pivotant autour de l'axe de rotation Z'.

De préférence, le dispositif de verrouillage 10 comprend deux guides tubulaires 14 agencés d'un côté du montant vertical 4 opposé au montant 2 de la partie dormante B, et à l'intérieur desquels les verrous 12 peuvent coulisser en étant guidés en translation par le guide tubulaire 14.

A l'intérieur de chaque guide tubulaire 14 est disposé un ressort 16. On notera que les guides tubulaires 14 sont masqués sur les figures 2A à 2C, la figure 3 et la figure 5, afin de visualiser les ressorts 16. Les ressorts 16 constituent des moyens de rappel permettant de maintenir les verrous 12 dans leur position déployée.

Pour ce faire, les ressorts 16 exercent une force de rappel latéralement vers la droite sur un élément de butée 17, par exemple une vis traversant verticalement les verrous 12, cette force de rappel tendant à déplacer les verrous 12 vers leur position déployée et à les maintenir dans cette position.

On comprend donc que pour faire coulisser les verrous 12 vers la position rétractée de déverrouillage, il est nécessaire d'exercer un effort contraire à la force de rappel des ressorts 16. Par conséquent, lors du passage des verrous 12 de la position déployée de verrouillage, à la position rétractée de déverrouillage, les ressorts 16 sont comprimés à l'intérieur des guides tubulaires 14, notamment par les éléments de butée 17 dont la translation est rendue possible par des fentes présentes sur les guides tubulaires 14.

A l'inverse, lorsque l'effort permettant le passage des verrous 12 de la position déployée à la position rétractée est relâché, les verrous 12 sont ramenés automatiquement dans leur position déployée, par la force de rappel exercée par les ressorts 16. On comprend donc que la position « naturelle » des verrous 12, ou position nominale, est la position déployée de verrouillage, et qu'il est nécessaire d'appliquer un effort supplémentaire, typiquement manuel, sur les verrous 12 pour contrer la force de rappel des ressorts 16 et déplacer les verrous 12 en position rétractée.

Pour ce faire, le dispositif de verrouillage 10 comprend un levier d'actionnement 20 (ci-après nommé plus simplement « levier 20 »), permettant d'actionner simultanément les deux verrous 12.

Le levier 20 s'étend sensiblement verticalement entre une extrémité supérieure 41 fixée de manière mobile à l'élément haut 41 de la portion de support 40, et une extrémité inférieure 22 fixée de manière mobile à l'élément bas 42 de ladite portion de support 40.

Le levier 20 est mobile en rotation par rapport à l'élément bas 42, et donc par rapport à la partie ouvrante A, autour d'un premier axe de rotation R1 parallèle à la direction transversale Y. Le premier axe de rotation R1 est disposé à l'extrémité inférieure 22 du levier 20.

Le levier 20 comprend en outre une poignée de préhension 23 à son extrémité supérieure 21. Le levier 20 peut ainsi être actionné par l'intermédiaire de la poignée de préhension 23 de manière à pouvoir être pivoté autour du premier axe de rotation R1 dans un premier sens S1 (latéralement vers la gauche) ou dans un deuxième sens S2 (latéralement vers la droite).

Le fait que le premier axe de rotation R1 soit disposé à l'extrémité inférieure 22 du levier 20, elle-même de préférence située à proximité de l'extrémité inférieure de la partie ouvrante A, et que la poignée soit à l'extrémité supérieure 21, elle-même de préférence située à proximité de l'extrémité supérieure de la partie ouvrante A, confère au levier 20 une amplitude importante, et donc un bras de levier important facilitant l'actionnement du levier 20 et l'ouverture de la barrière 1.

Le levier 20 est relié aux verrous 12 par l'intermédiaire d'une pièce de liaison 30. La pièce de liaison 30 présente typiquement la forme d'une plaque allongée dont une potion centrale 31 est fixée au levier 20. Chaque extrémité 32 de la pièce de liaison 30 est fixée à un verrou 12. On notera que les deux extrémités 32 de la pièce de liaison 30 présente une forme coudée de manière à relier mécaniquement le levier 20 aux verrous 12.

De préférence, la portion centrale 31 de la pièce de liaison 30 est fixée au levier 20, au niveau d'une portion centrale de celui-ci, c'est-à-dire sensiblement à mi-chemin entre l'extrémité supérieure 21 et l'extrémité inférieure 22. La liaison entre le levier 20 et la pièce de liaison 30 est une liaison mobile, de telle sorte qu'une rotation relative entre le levier 20 et la pièce de liaison 30 soit possible autour d'un deuxième axe de rotation R2, parallèle à la direction transversale Y.

On notera que le deuxième axe de rotation R2 étant perpendiculaire à l'axe de translation des verrous 12, les extrémités 32 coudées de la pièce de liaison 30 permettent de transmettre le mouvement de rotation du levier 20 aux verrous 12, permettant leur translation.

En d'autres termes, la fixation mobile entre le levier 20 et la pièce de liaison 30 permet de transmettre la force exercée sur le levier 20 aux verrous 12, par l'intermédiaire de la pièce de liaison 30. Plus précisément, lorsque le levier 20 est actionné via la poignée 23, de manière à être pivoté dans le premier sens S1, la rotation du levier 20 autour du premier axe R1 entraîne en translation la pièce de liaison 30 latéralement vers la gauche dans la direction latérale X.

Le déplacement conjoint du levier 20 par rotation autour du premier axe de rotation R1, et de la pièce de liaison 30 par translation, implique également une rotation du levier 20 par rapport à la pièce de liaison 30 autour du deuxième axe de rotation R2, un tel déplacement étant autorisé par la liaison mobile entre le levier 20 et la pièce de liaison 30.

On notera également que le levier 20 comprend de préférence une fente oblongue 24 permettant le passage du moyen de fixation entre le levier 20 et la pièce de liaison 30, par exemple une vis, tout en permettant un déplacement relatif de cette vis le long de la fente 24, lors de l'actionnement du levier 20 et de la translation de la pièce de liaison 30.

Ainsi, l'actionnement du levier 20 dans le premier sens S1 entraîne une translation de la pièce de liaison 30, et donc simultanément des deux verrous 12 fixés à cette dernière, vers la gauche, permettant aux verrous 12 de passer de leur position déployée de verrouillage à leur position rétractée de déverrouillage.

On comprend donc qu'un seul mouvement (l'actionnement du levier 20 par la poignée 23) permet de déplacer conjointement les verrous 12 et ainsi d'ouvrir la partie ouvrante A de la barrière 1. Ce dispositif 10 de verrouillage présente donc l'avantage d'être simple d'utilisation, efficace et simple à actionner, tout en permettant un verrouillage robuste et sécurisant, par la présence des deux verrous 12.

Par ailleurs, l'élément haut 41 de la portion de support 40 comprend une portion de guidage 50. La portion de guidage 50 est une fente formée le long d'une face de l'élément haut 41 s'étendant horizontalement dans le plan XY, le levier 20, en particulier son extrémité supérieure 21, étant logée dans cette fente. La portion de guidage 50 permet ainsi de guider le levier 20 lors de son déplacement autour du premier axe de rotation R1, dans le sens S1 ou S2.

Cette portion de guidage 50 permet donc à la fois un débattement suffisant du levier 20 pour permettre sa manipulation et son actionnement, tout en limitant la course de ce dernier. En particulier, la course du levier 20 dans la direction transversale Y est limitée par la portion de guidage 50. Cela permet de limiter l'endommagement du levier 20 par déformation, si ce dernier était tiré de manière excessive vers l'arrière, du fait d'une manipulation accidentelle d'un opérateur, ou d'un animal passant sa tête au-dessus de la porte 3 et poussant la poignée 23.

En outre, la portion de guidage 50 comprend une rampe 51, qui est une protubérance formée en saillie le long d'un côté de la portion de guidage 50, et s'étendant à l'intérieur de la fente formée par la portion de guidage 50.

La rampe 51 comprend une paroi inclinée 51a formée en pente douce dans la direction latérale X, et une paroi de blocage 51b formée en pente abrupte, typiquement perpendiculaire à la direction latérale X, et donc parallèle à la direction transversale Y.

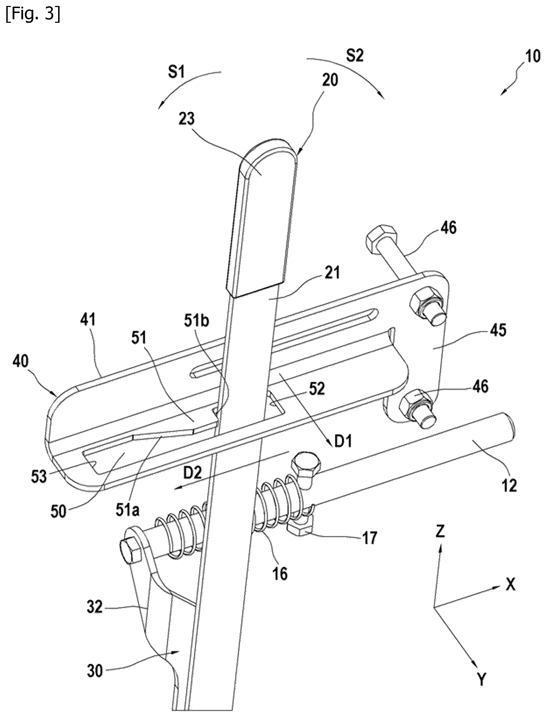

Lorsque la partie ouvrante A est dans sa position de fermeture, les verrous 12 sont dans leur position déployée et coopèrent avec les gâches des systèmes de fermeture 5. Dans cette configuration, le levier 20 est dans une position dite nominale, dans laquelle il est, au niveau de son extrémité supérieure 21, en butée contre une extrémité droite 52 de la portion de guidage 50. La rampe 51 est formée de telle sorte que, dans cette position nominale, le levier 20 soit intercalé entre l'extrémité droite 52 et la paroi de blocage 51b (figure 3).

La paroi de blocage 51b permet ainsi d'éviter un actionnement non souhaité du levier dans le premier sens S1, et donc une ouverture de la barrière 1, par exemple lorsqu'un animal passe une corne dans le jour existant entre la poignée 23 et le montant vertical 4 de la partie ouvrante A (figure 1). Par conséquent, la paroi de blocage 51b permet d'améliorer la sécurité de l'ensemble.

Compte tenu de la présence de la paroi de blocage 51b, l'actionnement du levier 20 par un opérateur, notamment pour passer la partie ouvrante A en position d'ouverture, est décrite ci-dessous, en référence à la figure 3.

Dans un premier temps, l'opérateur saisissant la poignée 23 doit tirer le levier 20 vers lui, c'est-à-dire vers l'arrière dans une première direction D1 parallèle à la direction transversale Y. Cette action entraine un décalage vers l'arrière de l'extrémité supérieure 21 du levier 20 par déformation élastique, qui permet de contourner la paroi de blocage 51b.

Dans un second temps, l'opérateur déplace la poignée 23 dans le premier sens S1, c'est-à-dire vers la gauche dans une deuxième direction D2 parallèle à la direction latérale X et perpendiculaire à la première direction D1. Le déplacement latéral du levier 20 est limité par l'extrémité gauche 53 de la portion de guidage 50, sur laquelle il peut venir en butée.

Cet actionnement du levier 20 dans la deuxième direction D2 entraîne la rotation du levier 20 autour du premier axe de rotation R1, et par conséquent une translation de la pièce de liaison 30 et des verrous 12 de la manière décrite précédemment. Le déplacement des verrous 12 vers leur position rétractée entraînent notamment la compression des ressorts 16 entre le fond du guide tubulaire 14 (ou l'extrémité 32 de la pièce de liaison 30) et les éléments de butée 17. Dans cette position du levier 12, représentée sur la figure 2B, la partie ouvrante A est libérée de la partie dormante B et l'ouverture de la barrière 1 est ainsi possible.

Lorsque la partie ouvrante A est passée dans sa position d'ouverture, l'opérateur peut alors relâcher la poignée 23. Compte tenu de la force de rappel exercée par les ressorts 16, les verrous 12 sont ramenés automatiquement vers leur position déployée, entrainant ainsi la pièce de liaison 30 en translation latéralement vers la droite dans la direction latérale X, la pièce de liaison 30 entrainant elle-même le levier 20 en rotation autour du premier axe de rotation R1 dans le deuxième sens S2.

En d'autres termes, lorsque l'opérateur relâche la poignée 23, la force de rappel des ressorts 16 ramène automatiquement le levier 20 de sa position illustrée sur la figure 2B, vers sa position nominale illustrée notamment sur la figure 2A et la figure 3, en venant en butée contre l'extrémité droite 52 de la portion de guidage 50.

Lors du passage de l'une à l'autre de ces positions par la force de rappel des ressorts 16, le levier 20 est guidé par la paroi inclinée 51a de la rampe 51. Plus précisément, au cours de son déplacement dans le deuxième sens S2, le levier 20 glisse le long de la paroi inclinée 51a, tout en se déformant légèrement de manière élastique dans la première direction D1 puis, lorsque qu'il passe au-delà de la paroi de blocage 51b, il retrouve, par mémoire de forme, sa position initiale intercalée entre la paroi de blocage 51b et l'extrémité droite 52.

La paroi inclinée 51a, compte tenu de sa structure continue en pente douce (contrairement à la paroi de blocage 51b présentant une discontinuité) permet ainsi de faciliter le retour du levier 20 dans sa position nominale, sans blocage et sans intervention extérieure nécessaire d'un opérateur. La paroi inclinée 51a permet donc d'améliorer encore l'efficacité du dispositif de verrouillage 10.

Ainsi, lorsque la partie ouvrante A se trouve dans sa position d'ouverture, après que l'opérateur a relâché la poignée 23, les verrous 12 retrouvent automatiquement leur position déployée.

A partir de cette position, il est possible de passer la partie ouvrante A de la position d'ouverture à la position de fermeture de deux manières, à savoir soit manuellement, soit automatiquement.

Pour refermer la partie ouvrante A manuellement, l'opérateur doit actionner manuellement le levier 20, de la manière décrite précédemment, pour passer les verrous 12 en position rétractée, puis rabattre la porte 3 jusqu'à ce que la partie ouvrante A soit en position de fermeture, les verrous 12 rétractés en vis-à-vis des gâches des systèmes de fermeture 5, puis relâcher la poignée 23 pour que les verrous 12 retrouvent automatiquement, par la force de rappel des ressorts 16, leur position déployée de verrouillage en coopération avec les gâches.

De manière alternative, l'opérateur peut également accompagner manuellement la poignée 23 dans le deuxième sens S2 pour que le verrouillage soit effectué de manière contrôlée, par exemple pour limiter l'usure du système ou les nuisances sonores engendrées par le retour du levier 20.

Pour refermer la partie ouvrante A automatiquement, l'opérateur peut simplement pousser la porte 3 vers la partie dormante B, sans actionner le levier 20. De manière alternative, la barrière 1 peut être équipée d'un système de rappel permettant à la partie ouvrante A de retourner automatiquement dans la position de fermeture lorsque la porte 3 est relâchée.

Dans ce cas de figure, lorsque la porte 3 arrive au niveau des montants 2 de la partie dormante B, les verrous 2, alors dans leur position déployée, viennent en butée contre les butées inclinées des systèmes de fermeture 5 décrits précédemment, passent ponctuellement en position rétractée, puis retrouvent immédiatement leur position déployée lorsqu'ils se retrouvent en vis-à-vis des gâches du système de fermeture 5. La partie ouvrante A est ainsi en position de fermeture et verrouillée par rapport à la partie dormante B.

Pour permettre ce claquage automatique de la partie ouvrante A, le dispositif de verrouillage 10 comprend de préférence une fente oblongue 44 formée dans l'élément bas 42 de la portion de support 40. Cette fente oblongue 44 s'étend horizontalement de gauche à droite dans la direction latérale X, et permet une translation de l'extrémité inférieure 22 du levier, et notamment une translation du premier axe de rotation R1, dans la direction latérale X.

Par exemple, l'extrémité inférieure 22 du levier 20 peut être fixé à l'élément bas 42 par l'intermédiaire d'une vis insérée dans la fente oblongue 44, le serrage de cette vis étant suffisamment lâche pour permettre la rotation du levier 20 autour du premier axe de rotation R1, et la translation de ce dernier, et donc de la vis, le long de la fente oblongue 44.

Ainsi, lorsque la partie ouvrante A est refermée automatiquement et que les verrous 12 viennent en butée contre les systèmes de fermeture 5 de la manière décrite ci-dessus, la rétractation ponctuelle des verrous 12 est rendue possible par la fente oblongue 44.

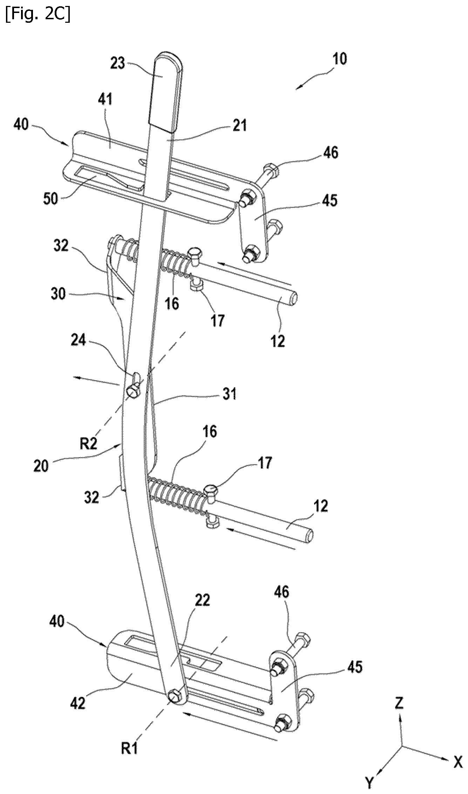

En effet, l'extrémité supérieure 21 du levier 20 étant en butée contre la paroi de blocage 51b, elle ne peut pas pivoter automatiquement dans le premier sens S1 sans intervention d'un opérateur. Par conséquent, lorsque les verrous 12 se rétractent par leur coopération avec les systèmes de fermeture 5 au moment du claquage de la porte 3, l'extrémité inférieure 22 du levier 20, et le premier axe de rotation R1, translate latéralement vers la gauche le long de la fente oblongue 44, dans la direction latérale X, l'extrémité supérieure 21 étant par ailleurs bloquée et servant ainsi de pivot (figure 2C).

Lorsque les verrous 12 repassent en position déployée par la force de rappel des ressorts 16 en pénétrant dans les gâches, l'extrémité inférieure 22 du levier 20 translate latéralement vers la droite le long de la fente oblongue 44 pour retrouver sa position initiale. La fente oblongue 44 permet donc le claquage automatique de la partie ouvrante A, améliorant ainsi davantage l'efficacité, la simplicité et le gain de temps pour l'opérateur.

Le dispositif de verrouillage 10 de l'invention permet ainsi d'améliorer la sécurité de l'ensemble par la présence de la rampe 51 et de la paroi de blocage 51b comme décrit plus haut, tout en conservant la possibilité de claquer automatiquement la partie ouvrante A grâce à la présence de la fente oblongue 44, et donc en améliorant l'efficacité du dispositif 10. On comprend donc que le dispositif de verrouillage 10 de l'invention permet d'actionner les deux verrous 12 en un seul mouvement du levier 20, tout en gardant la possibilité de claquer la partie ouvrante A de manière à permettre une fermeture automatique.

En outre, le levier 20 présente une forme au moins en partie arquée. Dans cet exemple, le levier 20 est sensiblement rectiligne de son extrémité supérieure 21 jusqu'à sa liaison avec la pièce intermédiaire 30, puis présente une portion arquée, de cette liaison jusqu'à son extrémité inférieure 22.

Compte tenu de cette forme arquée, lorsque le levier 20 est dans sa position nominale, le premier axe de rotation R1 est en butée sur une extrémité de la fente oblongue 44. Cela permet de créer un appui facilitant la rotation du levier dans le premier sens S1 autour du premier axe de rotation R1, lors de son actionnement.

Par ailleurs, dans la position nominale, l'extrémité supérieure 21 du levier est située plus à gauche, dans la direction latérale et dans le premier sens S1, que l'extrémité inférieure 22, et en particulier que le premier axe de rotation R1. Ainsi, cette forme arquée permet d'accentuer l'effet mécanique de levier, et donc de limiter l'effort nécessaire à l'opérateur pour actionner le levier 20 dans le premier sens S1 et ouvrir la barrière 1.

On notera également que compte tenu de la forme arquée du levier 20, l'élément haut 41 et l'élément bas 42 peuvent être identiques et comporter les mêmes caractéristiques et avoir les mêmes dimensions, sans qu'il soit par exemple nécessaire de rallonger l'élément bas 42 et/ou la fente oblongue 44 (ce qui serait nécessaire si le levier 20 était droit). En d'autres termes, l'élément haut 41 peut comprendre également une fente oblongue 44, et l'élément bas 42 peut comprendre également une portion de guidage 50.

Bien que la fente oblongue 44 et la portion de guidage 50 n'aient pas d'utilité propre dans l'élément haut 41 et l'élément bas 42 respectivement, cette configuration permet de simplifier la production du dispositif 10 en utilisant une seule chaîne de production pour ces éléments 41, 42, ce qui permet également de limiter les coûts.

Il suffit simplement, ensuite, de fixer l'élément haut 41 dans un sens donné, de telle sorte que la portion de guidage 50 s'étende dans le plan XY, et de fixer l'élément bas 42 dans le sens inverse, de telle sorte la face comprenant la fente oblongue 44 s'étende dans le plan XZ.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Dispositif (10) de verrouillage pour barrière (1) agricole comprenant une partie ouvrante (A) et une partie dormante (B), le dispositif (10) comprenant :
- au moins deux verrous (12) mobiles en translation entre une position déployée permettant un verrouillage de la partie ouvrante (A) par rapport à la partie dormante (B), et une position rétractée permettant une libération de la partie ouvrante (A),
- un levier d'actionnement (20) apte à pivoter par rapport à la barrière (1) autour d'un premier axe de rotation (R1), les au moins deux verrous (12) étant reliés au levier d'actionnement (20) de telle sorte qu'une rotation du levier d'actionnement (20) autour du premier axe de rotation (R1) entraîne un mouvement conjoint desdits verrous (12) entre leur position déployée et leur position rétractée, dans lequel une extrémité supérieure (21) du levier d'actionnement (20) comprend une poignée de préhension (23), le premier axe de rotation (R1) étant disposé à une extrémité inférieure (22) dudit levier d'actionnement (20), l'extrémité inférieure (22) étant apte à être disposée à proximité d'une extrémité inférieure de la partie ouvrante (A), et l'extrémité supérieure (21) étant apte à être disposée à proximité de l'extrémité supérieure de la partie ouvrante (A).

2. Dispositif (10) selon la revendication 1, le dispositif (10) étant configuré pour exercer une force de rappel sur les verrous (12) tendant à les maintenir dans leur position déployée, le levier d'actionnement (20) étant apte à être actionné pour pivoter dans un premier sens (S1) de rotation entraînant le mouvement conjoint desdits verrous (12) de leur position déployée vers leur position rétractée à l'encontre de la force de rappel, et à pivoter dans un deuxième sens (S2) de rotation opposé au premier sens (S1) de rotation lorsque les verrous (12) sont ramenés dans leur position déployée par la force de rappel.

3. Dispositif (10) selon la revendication 1 ou 2, comprenant une pièce de liaison (30) à laquelle sont fixées les au moins deux verrous (12), la pièce de liaison (30) étant fixée de manière mobile en rotation par rapport au levier d'actionnement (20), de telle sorte qu'une rotation du levier d'actionnement (20) autour du premier axe de rotation (R1) entraîne une translation de la pièce de liaison (30) et une rotation relative entre la pièce de liaison (30) et le levier d'actionnement (20) autour d'un deuxième axe de rotation (R2).

4. Dispositif (10) selon l'une quelconque des revendications 1 à 3, comprenant une portion de support (40) apte à être fixée à la barrière (1) et supportant le levier d'actionnement (20), la portion de support (40) comprenant un élément haut (41) disposé plus haut que les deux verrous (12), et un élément bas (42) disposé plus bas que les deux verrous (12).

5. Dispositif (10) selon la revendication 4, dans lequel le levier d'actionnement (20) est fixé à l'élément bas (42) de manière mobile en rotation et est apte à pivoter par rapport audit élément bas (42) autour du premier axe de rotation (R1).

6. Dispositif (10) selon la revendication 4 ou 5, dans lequel l'élément haut (41) comprend une portion de guidage (50) apte à recevoir et à guider le levier d'actionnement (20) lors de son actionnement.

7. Dispositif (10) selon la revendication 6, dans lequel la portion de guidage (50) comprend une rampe (51) ayant une paroi inclinée (51a) apte à guider le levier d'actionnement (20) lors du passage des verrous (12) de leur position rétractée à leur position déployée, et une paroi de blocage (51b) apte à limiter un déplacement du levier d'actionnement (20) dans un sens de rotation permettant le passage des verrous (12) de leur position déployée à leur position rétractée.

8. Dispositif (10) selon l'une quelconque des revendications 4 à 7, dans lequel l'élément bas (42) comprend une fente oblongue (44) permettant une translation du premier axe de rotation (R1).

9. Dispositif (10) selon l'une quelconque des revendications 1 à 8, dans lequel le levier d'actionnement (20) est au moins en partie arqué.

10. Dispositif (10) selon l'une quelconque des revendications 1 à 9, dans lequel les verrous (12) sont chacun montés mobiles en translation dans un guide tubulaire (14) renfermant un ressort (16) apte à maintenir les verrous (12) dans la position déployée.

11. Barrière (1) agricole comprenant une partie ouvrante (A) et une partie dormante (B), et un dispositif (10) de verrouillage selon l'une quelconque des revendications précédentes.
